# EUROPEAN PATENT SPECIFICATION

(11) **EP 1 777 921 B1**
(45) Date of publication and mention of the grant of the patent: **04.07.2012**
(21) Application number: 06022080.3
(22) Date of filing: 20.10.2006
(51) Int. Cl.: H04M 1/02

(54) **Slide module and mobile terminal therefor**
Verschiebemodul und Mobilendgerät dafür
Module de coulissement et terminal mobile associé

(30) Priority: 21.10.2005 KR 20050099879
(43) Date of publication of application: 25.04.2007
(73) Proprietor: LG Electronics Inc., Seoul, 150-721 (KR)
(72) Inventor: Park, Hyo-Sung, Bundang-Gu Seongnam Gyeonggi-Do (KR)
(74) Representative: Katérle, Axel

(56) References cited:
- WO-A1-01/84729
- WO-A1-2006/075871
- WO-A2-2004/021681
- US-A1- 2004 137 940
- US-B1- 6 175 990

## Description

### BACKGROUND OF THE INVENTION

### 1. Field of the Invention

The present invention relates to a mobile terminal having a slide module and, more particularly, to a slide module slidably movable in one direction and foldable in a different direction and a mobile terminal having the slide module.

### 2. Description of the Related Art

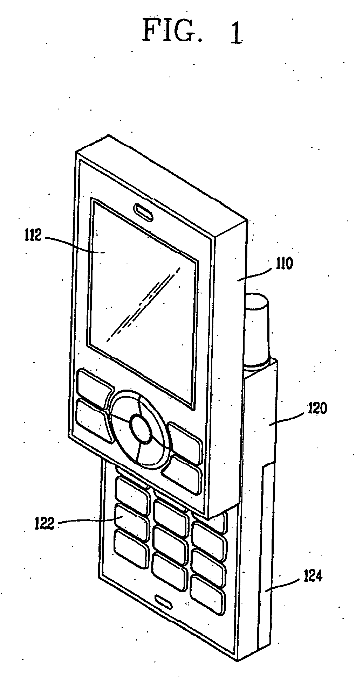

FIG. 1 is a perspective view of a slide type mobile terminal according to the related art.

The related art slide type mobile terminal includes a display unit 110 having a display 112 for visually displaying various information; a terminal body 120 for slidably mounted at the display unit 110 and having a keypad 122 for inputting information and a battery 124; and a slide module (not shown) installed between the display unit 110 and the terminal body 120 and slidably moving the display unit 110 with respect to the terminal body 120 relatively.

When the display unit 110 is slidably moved in a lengthwise direction, the mobile terminal is opened, and when the display unit 110 is slidably moved in the opposite direction, the mobile terminal is slidably closed. In this case, when the display unit 110 is slidably moved in the lengthwise direction and opened, the keypad 122 installed on the terminal body 120 is exposed to allow a user to manipulate the keypad 122 to input information.

However, in the related art slide type mobile terminal, the display unit is slidably moved to be opened in only the lengthwise direction, various functions are not satisfied.

Other prior art are disclosed by WO 2006/075821 (Art. 54(3) EPC), US 2004/137940 and WO 2004/021661.

### SUMMARY OF THE INVENTION

An exemplary feature of the present invention is to provide a slide module capable of being slidably moved in a vertical (up and down) direction and folded in a horizontal (left and right) direction, satisfying various functions, and a mobile terminal having the slide module.

To implement at least the above feature in whole or in parts, the present invention provides a mobile terminal as in claim 1.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
FIG. 1 is a perspective view showing a slide type mobile terminal according to the related art;
FIG. 2 is a perspective view of a mobile terminal according to the present invention;
FIG. 3 is a perspective view showing a state of the slidably moved mobile terminal according to the present invention;
FIG. 4 is a sectional view showing a state of a folded mobile terminal;
FIG. 5 is an exploded perspective view of the mobile terminal according to the present invention;
FIG. 6 is a sectional view showing a cam unit of a slide module according to the present invention;
FIG. 7 is a perspective view showing a state of a slide module mounted in the mobile terminal according to the present invention;
FIG. 8 is an operational state of the slide module according to the present invention;
FIG. 9 is a perspective view showing an FPC connection structure of the slide module according to the present invention; and
FIGs. 10 and 11 are front view showing an FPC connection structure of the mobile terminal according to the present invention.

### DETAILED DESCRIPTION OF THE INVENTION

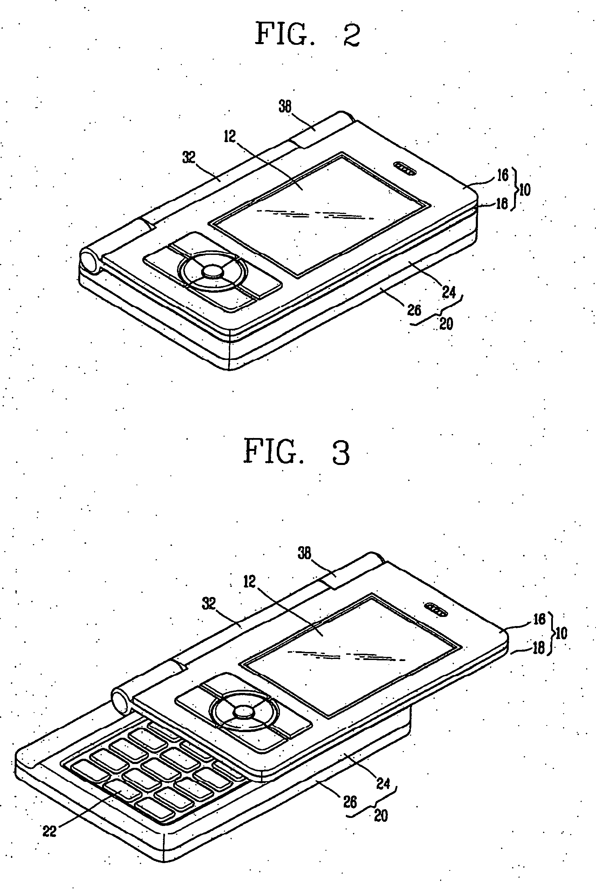

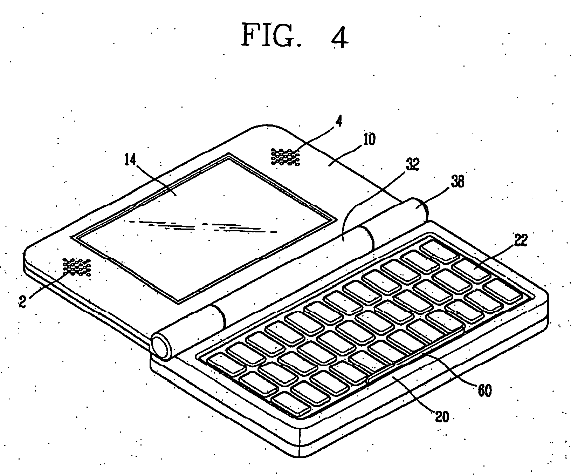

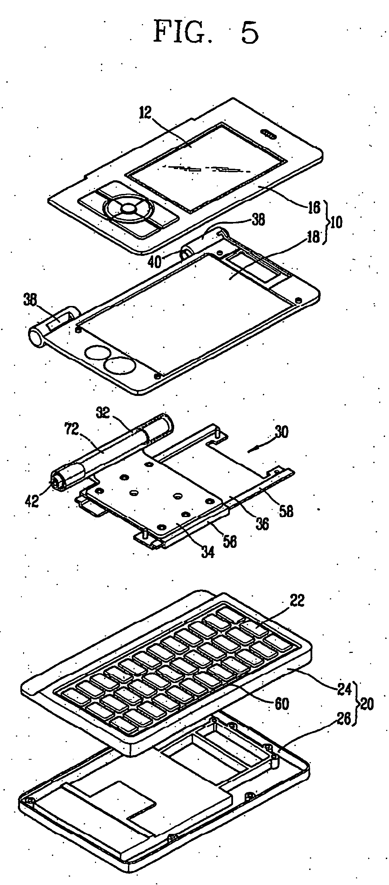

FIG. 2 is a perspective view of a mobile terminal according to the present invention, FIG. 3 is a perspective view showing a state of the slidably moved mobile terminal according to the present invention, FIG. 4 is a sectional view showing a state of a folded mobile terminal, and FIG. 5 is an exploded perspective view of the mobile terminal according to the present invention.

The mobile terminal according to the present invention includes a first body 10 having displays 12 and 14 for displaying information; a second body 20 having a keypad 22 for inputting information; and a slide module 30 installed between the first and second bodies 10 and 20 and allowing the first body 10 to be slidably moved and folding the first body 10.

The first body 10 includes an upper body 16 with a front display 12 mounted on its front surface and a rear body 18 mounted on the upper body 16 and having a rear display 14 mounted thereon.

A pair of speakers 2 and 4 are mounted on both side portions of the rear surface of the first body 10 and generate a sound, respectively.

The second body 20 includes an upper body 24 having the keypad 22 mounted on its front surface and a lower body 26 mounted on the upper body 24 and receiving a battery therein.

The slide module 30 includes a hinge member 32 rotatably hinge-connected at the first body 10, a slide member 34 to which the hinge member 32 is fixed, and a slide rail 36, at which the slide member 34 is mounted to be slidably movable, fixed at the second body 20.

Preferably, the hinge member 32 is formed in a circular bar type with an internal space therein and rotatably mounted at a hinge connection part 38 formed at the lower body 18 of the first body 10.

One end portion of the hinge member 32 is inserted into a hinge protrusion 40 protruded from the hinge connection part 38 formed at the side of the lower body 18, and a cam unit 42 is mounted between the other end of the hinge member 32 and the hinge connection part 38 formed at the lower body 18 and provides elastic force in a direction that the first body 10 is opened and closed when folded.

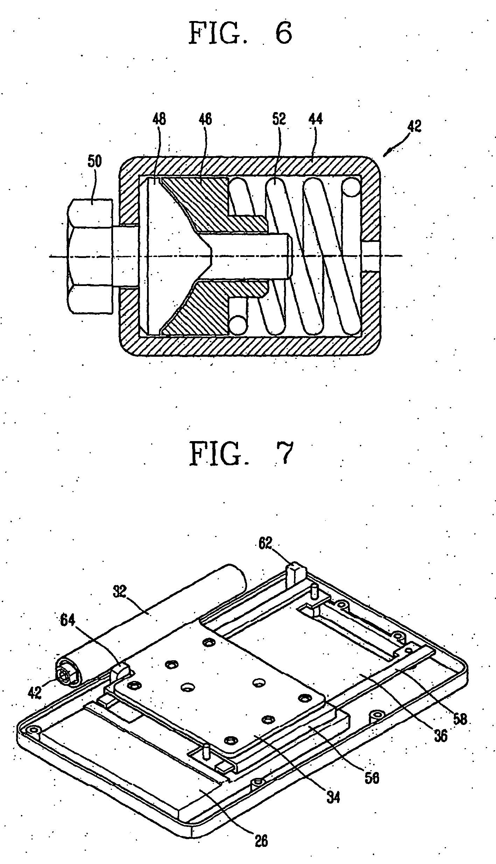

As shown in FIG. 6, the cam unit 42 includes a housing 44 fixed within the hinge member 32, a first cam 46 mounted to be linearly movable within the housing 44 and having a first cam face, a second cam 48 having a second cam face contacting with the first cam face and rotatably disposed within the housing 44, a head 50 connected with the second cam 48 and fixed at the hinge connection part 38, and a spring 52 disposed within the housing 44 and providing elastic force to the first cam 46.

In the cam unit 42, when the first body 10 is rotated in the opening or closing direction, the second cam 48 connected by the head 50 is rotatably moved, and accordingly, the first cam 46 is linearly moved according to an interaction of the first and second cam faces, and when the first cam 46 passes a dead point, the first body 10 is automatically opened or closed by virtue of elastic force of the spring 52.

The slide member 34 has a flat plate form, and the side of the slide member 34 is integrally formed at the side of the hinge member 32. The slide member 34 is mounted to be slidably moved on the slide rail 36. Namely, a rail part 56 is formed to be bent twice at a right angle at both edges of the slide member 34, inserted in the slide rail 36, and slidably moved.

The slide rail 36 is fixed at the second body 20, on which the slide member 34 is slidably disposed, and a guide protrusion 58, in which the rail part 56 is inserted, is formed at both edges of the slide rail 36 in an upwardly protruded form.

Preferably, the slide rail 36 is fixed between the upper body 22 and the lower body 26 in a state that the slide member 34 is slidably combined therewith.

An elastic force providing unit (not shown) is installed between the slide rail 36 and the slide member 34 in order to provide an elastic force to allow the slide member 34 to be automatically opened when the slide member 34 is pushed in the opening direction or in the closing direction.

The elastic force providing unit can be applicable to any structure so long as the slide member is automatically opened by virtue of the elastic force of the spring when the elastic force providing unit pushes the slide member 34 and the slide member 34 passes the dead point.

A buffer member 60 is installed on the upper surface of the second body 20 in order to buffer an impact generated when the first body 10 is folded. The buffer member 60 also serves to guide the first body 10 when the first body 10 is slidably moved.

Preferably, the buffer member 60 is made of a rubber material and formed to be protruded with a certain height in the lengthwise direction of the second body 20 on the upper surface of the second body 20.

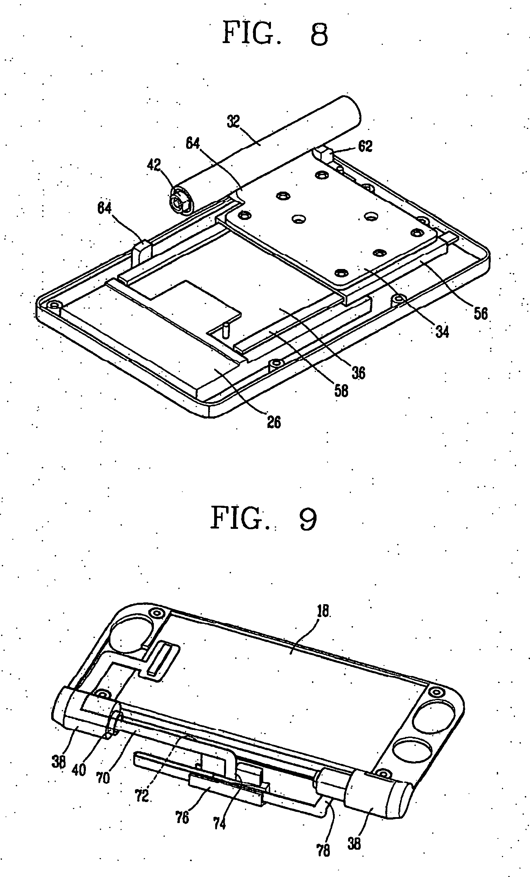

FIG. 7 is a perspective view showing a state of a slide module mounted in the mobile terminal according to the present invention, FIG. 8 is an operational state of the slide module according to the present invention.

Stoppers 62 and 64 are formed on the lower body 26 of the second body 20 to limit a slidable movement distance of the first body 10 by causing the slide member 34 to be caught when the first body 10 is slidably moved.

The stoppers 62 and 64 are formed to be protruded from the upper surface of the lower body 26 of the second body 20. When the first body 10 is in an opened state after being slidably moved, one side of the guide member 34 is caught by the first stopper 62, and when the first body 10 is in a closed state after being slidably moved, the other side of the slide member 34 is caught by the second stopper 64.

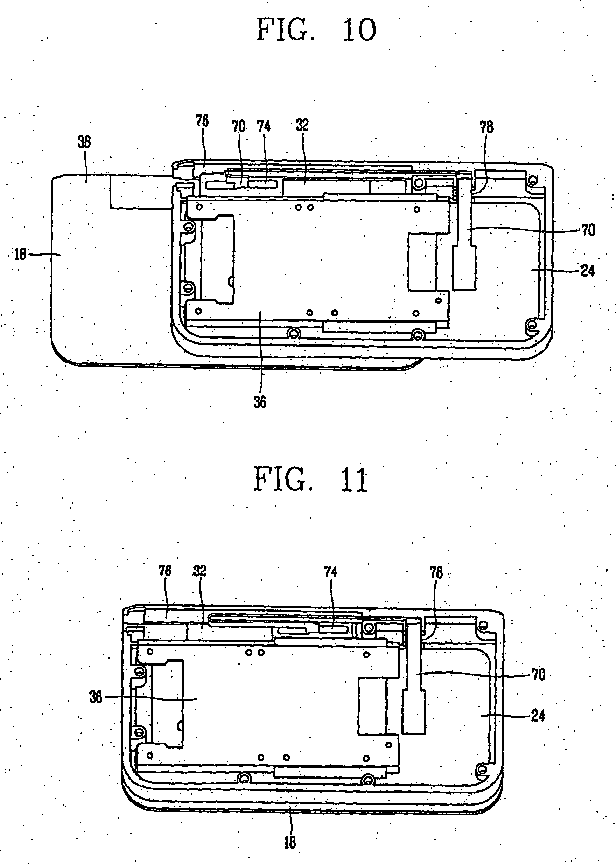

FIG. 9 is a perspective view showing an FPC connection structure of the slide module according to the present invention, and FIGs. 10 and 11 are front view showing an FPC connection structure of the mobile terminal according to the present invention.

An FPC 70 is provided between the first and second bodies 10 and 20 and electrically connects them. A passage 72, through which the FPC 70 connected with the first body 10 passes, is formed at the hinge member 32 in a lengthwise direction, and a withdrawal hole 74 is formed at the side of the center of the hinge member 32, through which the FPC 70 is withdrawn so as to be connected with the second body 20 after passing through the passage 72.

A receiving portion 76 is formed at the side of the upper body 24 of the second body 20 in a lengthwise direction, in which the FPC 70, which has passed through the withdrawal hole 74, is received in an overlap state. A withdrawal hole 78 is formed at one side of the receiving portion 76, through which the FPC received in the receiving portion 76 is withdrawn so as to be connected with the second body 20.

Herein, because the FPC 70 is disposed in an overlap state in the receiving portion 76, when the first body 10 is slidably moved, the FPC 70 is unfolded so the slidable movement of the first body 10 is not interfered.

With one end connected with the first body 10, the FPC 70 passes through the passage 72 formed at the hinge member 32, withdrawn through the withdrawal hole 74 formed at the hinge member 32, received in the overlap state in the receiving portion 76 formed at the second body 20, withdrawn through the withdrawal hole 78 of the receiving portion 76, and then connected with the second body 20.

The operation of the slide module constructed as described above according to the present invention will now be described in detail.

First, when the first body 10 is used in a communication mode, the operation of the slidable movement of the body 10 is performed as follows. When the first body 10 is pushed in the lengthwise direction, the slide member 34 connected with the first body 10 by the hinge member 32 is slidably moved along the slide rail 36 fixed at the second body 20 to guide the slidable movement of the first body 10. At this time, the elastic force providing unit installed between the slide member 34 and the slide rail 36 provides the elastic force to the first body 10 to cause the first body 10 to be opened automatically.

When the first body 10 is slidably moved, the FPC 70 received in the overlap state in the receiving portion 76 formed at the second body 20 is moved together without interfering the movement of the first body.

When the terminal is used in a game mode or a video appreciation mode, etc., the operation of rotating the first body in a lateral direction is performed as follows. When the first body 10 is rotated, the hinge connection part 38 formed at the first body 10 is rotated centering around the hinge member 32 fixed at the slide member 34 mounted at the second body 20 to guide a rotation of the first body 10. At this time, when the first body 10 is rotated, the cam member 42 mounted between the hinge connection part 38 and the hinge member 32 provides the elastic force in the opening direction to cause the first body 10 to be automatically opened. And, the cam member 42 also provides the same elastic force to the first body when the first body 10 is closed.

As so far described, the mobile terminal according to the present invention is constructed such that the hinge member is rotatably connected with the first body, the slide rail is mounted on the second body, the hinge member is fixed at the slide member and the slide member is slidably mounted on the slide rail. With this structure, when the terminal is used in the call mode, the first body is slidably moved, and when the terminal is used in the video appreciation mode or in the game mode, the first body can be folded or unfolded to be used, whereby various functions can be satisfied.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A mobile terminal comprising:
a first body (10);
a second body (20) mounted at the first body (10) such that the second body (20) can be opened and closed; and
a slide module (30) mounted between the first and second bodies (10; 20) for slidably moving the first body (10) in one direction and folding the first body (10) in a different direction, wherein the slide module (30) comprises:
a hinge member (32) rotatably supported at the first body (10);
a slide member (34) fixed at the hinge member (32), the slide member (34) having a flat plate form; and
a slide rail (36) movably supporting the slide member (34) and fixed at the second body (20);
wherein the hinge member (32) is fixed at the side of the slide member (34);
**characterized in that** a rail part (56) is formed at both opposed edges of the flat slide member (34) and slidably mounted on the slide rail (36), wherein the slide rail (36) is engaged on the upper surface of the second body (20) and includes a guide protrusion (58), in which the rail part (56) is inserted, formed at both opposed edges thereof.

2. The terminal of claim 1, wherein the first body (10) comprises a front display (12) on its front surface, a rear display (14) mounted on its rear surface, and a pair of speakers (2, 4) mounted on both sides of the rear surface.

3. The terminal of claim 1, wherein a hinge connection part (38) is formed at one side of the first body (10), at which the slide module (30) is rotatably mounted.

4. The terminal of claim 1, wherein the second body (20) includes keys (22) mounted on the entire region of its front surface.

5. The terminal of claim 1, wherein the hinge member (32) is formed in a bar type and its both ends are rotatably mounted at a hinge connection part (38) formed at the first body (10).

6. The terminal of claim 5, wherein the hinge member (32) includes a passage (72), through which an FPC (70) connected with the first body (10) passes, formed in a lengthwise direction therein.

7. The terminal of claim 6, wherein a withdrawal hole (74) is formed at the hinge member (32) to allow the FPC (70) to be connected with the second body (20) after passing through the passage (72).

8. The terminal of claim 7, wherein an FPC receiving part (76) is formed in a lengthwise direction at the side of the second body (20), in which the FPC (70) is received in an overlap state after passing through the withdrawal hole (74).

9. The terminal of claim 1, wherein a cam unit (42) is mounted between the hinge member (32) and the first body (10) and provides elastic force in a direction that the first body (10) is rotated.

10. The terminal of claim 9, wherein the cam unit (42) comprises:
a housing (44) fixed within the hinge member (32);
a first cam (46) mounted to be linearly movable within the housing (44) and having a first cam face;
a second cam (48) having a second cam face contacting with the first cam face and rotatably disposed within the housing (44);
a head (50) connected with the second cam (48) and fixed at the first body (10); and
a spring (52) disposed within the housing (44) and providing elastic force to the first cam (46).

11. The terminal of claim 1, wherein the slide rail (36) is mounted within the second body (20) in a state that the slide member (34) is supported.

12. The terminal of claim 1, further comprising:
a buffer member (60) installed on the upper surface of the second body (20) to lessen an impact when the first body (10) is folded and guiding the first body (10) when the first body is slidably moved.

13. The terminal of claim 12, wherein the buffer member (60) is formed to be protruded in a lengthwise direction of the second body (20) on the upper surface of the second body.

14. The terminal of claim 1, wherein a stopper (62, 64) is formed at the second body (20) to allow the slide member (34) to be caught when the slide member (34) is slidably moved to be opened or closed.

15. The terminal of claim 14, wherein the stopper (62, 64) comprises:
a first stopper (62) formed to be protruded from an inner side of the second body (20), and allowing the slide member (34) to be caught when the slide member is slidably moved in an opening direction; and
a second stopper (64) allowing the slide member (34) to be caught when the slide member is slidably moved in a closing direction.

## Patentansprüche

1. Mobiles Endgerät, umfassend:
- einen ersten Körper (10),
- einen zweiten Körper (20), welcher derart an dem ersten Körper (10) angebracht ist, dass der zweite Körper (20) geöffnet und geschlossen werden kann, und
- ein zwischen dem ersten und dem zweiten Körper (10; 20) angebrachtes Schiebemodul (30) zum Verschieben des ersten Körpers (10) in einer Richtung und zum Klappen des ersten Körpers (10) in einer anderen Richtung, wobei das Schiebemodul (30) umfasst:
- ein drehbar an dem ersten Körper (10) abgestütztes Scharnierelement (32),
- ein an dem Scharnierelement (32) befestigtes Schiebeelement (34), wobei das Schiebeelement (34) die Form einer flachen Platte hat, und
- eine das Schiebeelement (34) beweglich abstützende Gleitschiene (36), welche an dem zweiten Körper (20) befestigt ist,
wobei das Scharnierelement (32) seitlich an dem Schiebelement (34) befestigt ist,
**dadurch gekennzeichnet, dass** an beiden gegenüberliegenden Rändern des flachen Schiebeelements (34) ein Schienenteil (56) gebildet ist und verschiebbar auf der Gleitschiene (36) angebracht ist, wobei die Gleitschiene (36) mit der Oberseite des zweiten Körpers (20) in Eingriff steht und einen an beiden gegenüberliegenden Rändern der Gleitschiene gebildeten Führungsvorsprung (58) aufweist, in welchen der Schienenteil (56) eingesetzt ist.

2. Endgerät nach Anspruch 1, wobei der erste Körper (10) an seiner Vorderseite eine vordere Anzeige (12), eine an seiner Rückseite angebrachte rückseitige Anzeige (14) sowie ein paar Lautsprecher (2, 4) umfasst, welche auf beiden Seiten der Rückseite angebracht sind.

3. Endgerät nach Anspruch 1, wobei auf einer Seite des ersten Körpers (10), an welcher das Schiebemodul (30) drehbar angebracht ist, ein Scharnierverbindungsteil (38) gebildet ist.

4. Endgerät nach Anspruch 1, wobei der zweite Körper (20) Tasten (22) aufweist, welche auf dem gesamten Bereich seiner Vorderseite angebracht sind.

5. Endgerät nach Anspruch 1, wobei das Scharnierelement (32) stabartig ausgebildet ist und seine beiden Enden drehbar an einem an dem ersten Körper (10) gebildeten Scharnierverbindungsteil (38) gehalten sind.

6. Endgerät nach Anspruch 5, wobei das Scharnierelement (32) einen darin in Längsrichtung gebildeten Kanal (72) aufweist, durch welchen eine mit dem ersten Körper (10) verbundene FPC (70) hindurchreicht.

7. Endgerät nach Anspruch 6, wobei an dem Scharnierelement (32) ein Rückzugsloch (74) gebildet ist, um die FPC (70) mit dem zweiten Körper (20) nach Durchtritt durch den Kanal (72) verbinden zu können.

8. Endgerät nach Anspruch 7, wobei an der Seite des zweiten Körpers (20) in Längsrichtung ein FPC-Aufnahmeteil (76) gebildet ist, in dem die FPC (70) nach Durchgang durch das Rückzugsloch (74) in einem überlappenden Zustand aufgenommen wird.

9. Endgerät nach Anspruch 1, wobei zwischen dem Scharnierelement (32) und dem ersten Körper (10) eine Nockeneinheit (42) angebracht ist, welche eine elastische Kraft in einer Richtung bereitstellt, in welcher der erste Körper (10) gedreht wird.

10. Endgerät nach Anspruch 9, wobei die Nockeneinheit (32) umfasst:
- ein in dem Scharnierelement (32) befestigtes Gehäuse (44),
- einen ersten Nocken (46), welcher linearbeweglich in dem Gehäuse (44) angebracht ist und eine erste Nockenfläche aufweist,
- einen zweiten Nocken (48), welcher eine mit der ersten Nockenfläche in Kontakt stehende zweite Nockenfläche aufweist und drehbar in dem Gehäuse (44) angeordnet ist,
- einen mit dem zweiten Nocken (48) verbundenen Kopf (50), welcher an dem ersten Körper (10) befestigt ist, und
- eine in dem Gehäuse (44) angeordnete Feder (52), welche eine elastische Kraft auf den ersten Nocken (46) ausübt.

11. Endgerät nach Anspruch 1, wobei die Gleitschiene (36) in dem zweiten Körper (20) in einem Zustand angebracht ist, in dem das Schiebeelement (34) abgestützt ist.

12. Endgerät nach Anspruch 1, ferner mit einem Pufferelement (60), welches an der Oberseite des zweiten Körpers (20) angebracht ist, um beim Klappen des ersten Körpers (10) einen Stoß abzuschwächen und bei einer Schiebebewegung des ersten Körpers den ersten Körper (10) zu führen.

13. Endgerät nach Anspruch 12, wobei das Pufferelement (60) so ausgebildet ist, dass es an der Oberseite des zweiten Körpers in Längsrichtung des zweiten Körpers (20) vorsteht.

14. Endgerät nach Anspruch 1, wobei an dem zweiten Körper (20) ein Anschlag (62, 64) gebildet ist, um das Schiebeelement (34) auffangen zu können, wenn das Schiebelement (34) zum Öffnen oder Schließen verschoben wird.

15. Endgerät nach Anspruch 14, wobei der Anschlag (62, 64) umfasst:
- einen ersten Anschlag (62), welcher so ausgebildet ist, dass er von der Innenseite des zweiten Körpers (20) vorsteht, und welcher es gestattet, das Schiebeelement (34) aufzufangen, wenn das Schiebeelement in einer Öffnungsrichtung verschoben wird, und
- einen zweiten Anschlag (64), welcher es ermöglicht, das Schiebeelement (34) aufzufangen, wenn das Schiebeelement in einer Schließrichtung verschoben wird.

## Revendications

1. Terminal mobile comprenant :
un premier corps (10) ;
un deuxième corps (20) monté au niveau du premier corps (10) d'une manière telle que le deuxième corps (20) peut être ouvert et fermé ; et
un module de coulissement (30) monté entre les premier et deuxième corps (10 ; 20) destiné à déplacer de manière coulissante le premier corps (10) dans une direction et à plier le premier corps (10) dans une direction différente, dans lequel le module de coulissement (30) comprend :
un élément de charnière (32) supporté en rotation au niveau du premier corps (10) ;
un élément coulissant (34) fixé au niveau de l'élément de charnière (32), l'élément coulissant (34) présentant une forme de plaque plate ; et
un rail de coulissement (36) supportant de manière mobile l'élément coulissant (34) et fixé au niveau du deuxième corps (20) ;
dans lequel l'élément de charnière (32) est fixé au niveau du côté de l'élément coulissant (34) ;
**caractérisé en ce qu'**une partie de rail (56) est formée au niveau des deux bords opposés de l'élément coulissant plat (34) et montée de manière coulissante sur le rail de coulissement (36), dans lequel le rail de coulissement (36) est engagé sur la surface supérieure du deuxième corps (20) et comprend une saillie de guidage (58), dans laquelle la partie de rail (56) est insérée, formée au niveau des deux bords opposés de celui-ci.

2. Terminal selon la revendication 1, dans lequel le premier corps (10) comprend un affichage avant (12) sur sa surface avant, un affichage arrière (14) monté sur sa surface arrière, et une paire de haut-parleurs (2, 4) montés sur les deux côtés de la surface arrière.

3. Terminal selon la revendication 1, dans lequel une partie de raccordement de charnière (38) est formée au niveau d'un côté du premier corps (10), au niveau duquel le module de coulissement (30) est monté en rotation.

4. Terminal selon la revendication 1, dans lequel le deuxième corps (20) comprend des touches (22) montées sur la totalité de la région de sa surface avant.

5. Terminal selon la revendication 1, dans lequel l'élément de charnière (32) est formé selon un type de barre et ses deux extrémités sont montées en rotation au niveau de la partie de raccordement de charnière (38) formée au niveau du premier corps (10).

6. Terminal selon la revendication 5, dans lequel l'élément de charnière (32) comprend un passage (72), à travers lequel passe un FPC (70) raccordé au premier corps (10), formé dans le sens de la longueur dans celui-ci.

7. Terminal selon la revendication 6, dans lequel un trou de retrait (74) est formé au niveau de l'élément de charnière (32) pour permettre au FPC (70) d'être raccordé avec le deuxième corps (20) après être passé à travers le passage (72).

8. Terminal selon la revendication 7, dans lequel une partie de réception de FPC (76) est formée dans un sens de la longueur au niveau du côté du deuxième corps (20), dans laquelle le FPC (70) est reçu dans un état de chevauchement après être passé à travers le trou de retrait (74).

9. Terminal selon la revendication 1, dans lequel une unité de came (42) est montée entre l'élément de charnière (32) et le premier corps (10) et fournit une force élastique dans une direction dans laquelle le premier corps (10) est mis en rotation.

10. Terminal selon la revendication 9, dans lequel l'unité de came (42) comprend :
un logement (44) fixé à l'intérieur de l'élément de charnière (32) ;
une première came (46) montée pour être déplaçable de façon linéaire à l'intérieur du logement (44) et comportant une première face de came ;
une deuxième came (48) comportant une deuxième face de came contactant la première face de came et disposée en rotation à l'intérieur du logement (44) ;
une tête (50) raccordée avec la deuxième came (48) et fixée au niveau du premier corps (10) ; et
un ressort (52) disposé à l'intérieur du logement (44) et fournissant une force élastique à la première came (46).

11. Terminal selon la revendication 1, dans lequel le rail de coulissement (36) est monté à l'intérieur du deuxième corps (20) dans un état dans lequel l'élément coulissant (34) est supporté.

12. Terminal selon la revendication 1, comprenant en outre :
un élément de tampon (60) installé sur la surface supérieure du deuxième corps (20) pour atténuer un impact lorsque le premier corps (10) est plié et guidant le premier corps (10) lorsque le premier corps est déplacé de manière coulissante.

13. Terminal selon la revendication 12, dans lequel l'élément de tampon (60) est formé pour faire saillie dans le sens de la longueur du deuxième corps (20) sur la surface supérieure du deuxième corps.

14. Terminal selon la revendication 1, dans lequel une butée (62, 64) est formée au niveau du deuxième corps (20) pour permettre à l'élément coulissant (34) d'être arrêté lorsque l'élément coulissant (34) est déplacé de manière coulissante pour être ouvert ou fermé.

15. Terminal selon la revendication 14, dans lequel la butée (62, 64) comprend :
une première butée (62) formée pour faire saillie depuis un côté interne du deuxième corps (20) et permettant à l'élément coulissant (34) d'être arrêté lorsque l'élément coulissant est déplacé de manière coulissante dans une direction d'ouverture ; et
une deuxième butée (64) permettant à l'élément coulissant (34) d'être arrêté lorsque l'élément coulissant est déplacé de manière coulissante dans une direction de fermeture.
